# FASCICULE DE BREVET EUROPEEN

(11) **EP 1 789 293 B1**
(45) Date de publication et mention de la délivrance du brevet: **29.12.2010**
(21) Numéro de dépôt: 05761098.2
(22) Date de dépôt: 07.07.2005
(51) Int. Cl.: B60R 25/00, G07C 9/00

(54) **SYSTEME DE COMMANDE POUR VEHICULE**
FAHRZEUGSTEUERUNGSSYSTEM
VEHICLE CONTROL SYSTEM

(30) Priorité: 15.07.2004 FR 0407842
(43) Date de publication de la demande: 30.05.2007
(73) Titulaire: Valeo Sécurité Habitacle, 94046 Créteil Cedex (FR)
(72) Inventeur: MUSAT, Ciprian, c/o Valeo Sécurité Habitacle, F-94042 Créteil Cedex (FR)
(74) Mandataire: Jacquot, Ludovic R. G.
(86) Numéro de dépôt international: PCT/EP2005/053263
(87) Numéro de publication internationale: WO 2006/008244

(56) Documents cités:
- EP-A- 0 991 026
- DE-A1- 4 435 894
- US-A- 4 189 712
- US-A- 4 591 854
- US-A- 4 794 268
- US-A- 5 204 672
- US-A- 5 811 897

## Description

La présente invention concerne un système de commande pour véhicule du genre permettant notamment l'accès au véhicule par la commande de serrures et/ou des actionneurs manoeuvrant les ouvrants du véhicule, ou encore permettant d'activer ou de désactiver l'organe de démarrage du groupe motopropulseur et les autres fonctions accessibles à l'utilisateur du véhicule.

Dans l'état de la technique, on a déjà décrit des systèmes de commande pour véhicule comportant un contrôleur de communication pour la commande du véhicule, le contrôleur étant installé à bord du véhicule. Le contrôleur de communication embarquée est en liaison avec un identifiant, généralement sous la forme d'un objet portatif. Le contrôleur de communication embarquée et l'objet portatif communiquent l'un avec l'autre à l'aide d'un canal de communication sans contact. Parmi les communications sans contact, on utilise souvent les ondes radio fréquence dans le domaine des basses fréquences ou dans le domaine des hautes fréquences, ainsi que les ondes infrarouges.

Plus récemment, on a utilisé une technique de communication mettant en oeuvre un courant traversant le corps. Particulièrement, cette technique présente l'avantage de mettre en relation physique le véhicule et le porteur de l'objet portatif d'identification, ce qui assure souvent la détection de la présence physique du porteur de l'objet portatif. À la différence, dans le cas d'un canal de communication sans contact, la détection de présence de l'objet portatif d'identification peut être positive alors que son porteur n'est pas présent. C'est notamment le cas, lorsque l'objet portatif d'identification a été oublié à l'intérieur du véhicule, ou lorsque la communication sans contact entre l'objet portatif et le contrôleur embarqué à bord du véhicule a été détournée à l'aide d'ondes radio fréquence notamment.

Par ailleurs, il existe actuellement des systèmes de commande pour véhicule utilisant des canaux radio fréquence et qui assure un nombre élevé de fonctions de commande à distance. Ces systèmes sont souvent très coûteux et ne sont disponibles que pour des véhicules nouveaux ou des véhicules de haut de gamme. Il existe un besoin sur le marché que des systèmes de commande plus simples puissent être disponibles à un coût inférieur. Un tel système est décrit dans DE 4435894 A selon le préambule de la revendication 1.

Pour porter remède à ces inconvénients de l'état de la technique, la présente invention concerne un système de communication entre un objet portatif d'identification et un contrôleur embarqué à bord d'un véhicule équipé d'un premier canal de communication sans contact entre au moins un objet portatif d'identification et un contrôleur de commande embarqué à bord d'un véhicule. L'invention est caractérisée par le fait que le système de communication comporte un second canal de communication utilisant un courant traversant le corps.

Selon un autre aspect de l'invention, le canal de communication mettant en oeuvre un courant traversant le corps est unidirectionnel et comporte un générateur de signal associé au contrôleur embarqué à bord du véhicule, et un récepteur de signal associé à l'objet portatif d'identification.

Selon un autre aspect de l'invention, le canal de communication mettant en oeuvre une communication sans contact est contrôlée par la réception d'un message prédéterminé, initiée par le contrôleur embarqué à bord du véhicule et transmis par l'intermédiaire du canal de communication mettant en oeuvre un courant traversant le corps.

Selon un autre aspect de l'invention, l'objet portatif d'identification est composé sur la base d'un objet portatif d'identification équipé de ressources assurant un canal de communication mettant en oeuvre un courant traversant le corps, à l'aide d'un second objet portatif d'identification dans lequel est réservée une ressource pour recevoir un circuit préexistant équipé de ressources assurant un canal de communication mettant en oeuvre une communication sans contact.

Selon un autre aspect de l'invention le canal de communication mettant en oeuvre une communication sans contact est un canal radio fréquence.

Selon un autre aspect de l'invention, le canal radio fréquence est d'un canal hautes fréquences.

Selon un autre aspect de l'invention, le contrôleur embarqué à bord du véhicule est connecté à un élément conducteur solidaire d'une partie de l'habitacle du véhicule.

Selon un autre aspect de l'invention, le message prédéterminé est généré par le contrôleur embarqué à bord du véhicule sur la base de la détection d'un mouvement et ou d'une action de l'utilisateur porteur de l'objet portatif d'identification.

Selon un autre aspect de l'invention, la détection d'un mouvement et ou d'une action de l'utilisateur est exécutée sur la base d'un capteur capacitif et ou d'un interrupteur.

Selon un autre aspect de l'invention, le message prédéterminé est généré périodiquement par le contrôleur embarqué à bord du véhicule.

Selon un autre aspect de l'invention, l'objet portatif d'identification comporte un moyen de réveil de ses composants électroniques sur la base de la réception d'un message prédéterminé transmis par le canal de communication mettant en oeuvre un courant traversant le corps.

Selon un autre aspect de l'invention, l'objet portatif d'identification comporte aussi un moyen pour générer un message connecté à une ressource d'émission d'une communication mettant en oeuvre un courant traversant le corps.

Selon un autre aspect de l'invention, la ressource d'émission d'une communication mettant en oeuvre un courant traversant le corps coopère avec un moyen de détection sans contact d'un courant traversant le corps, montés sur le véhicule et coopérant avec le contrôleur de commande embarqué à bord du véhicule.

Selon un autre aspect de l'invention, le contrôleur de commande embarqué à bord du véhicule coopère avec une pluralité de moyens de communication mettant en oeuvre un courant traversant le corps, chacun comportant au moins un moyen pour générer un signal identifiant une zone du véhicule dans laquelle est initiée la communication mettant en oeuvre un courant traversant le corps.

D'autres caractéristiques et avantages de la présente invention seront mieux compris à l'aide de la description et des figures annexées parmi lesquelles :
- la figure 1 est un schéma bloc expliquant un mode particulier de réalisation de l'invention ;
- la figure 2 est un schéma bloc expliquant un mode particulier de constitution d'un objet portatif d'identification exploité dans un système selon l'invention.

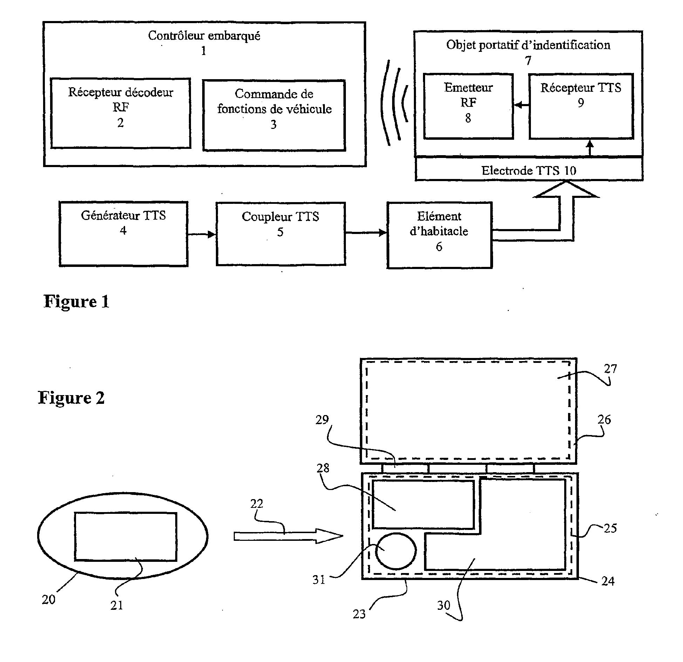

À la figure 1, on a représenté un schéma bloc expliquant un mode particulier de réalisation du système de commande de l'invention.

Le véhicule n'a pas été représenté mais il comporte une pluralité d'ouvrants comme les portières, un coffre arrière, un coffre de moteur, ainsi qu'un organe de démarrage connu sous le terme de démarreur qui n'a pas été représenté.

Il comporte une installation électrique, et particulièrement un bus de signalisation sur lequel peut être transféré des messages électroniques sous forme numérique.

Un contrôleur embarqué 1 permet de réaliser la commande des fonctions du véhicule qui sont dans la dépendance d'un objet portatif d'identification 7. Un tel contrôleur a déjà été décrit dans l'état de la technique et permet, à l'aide d'un récepteur décodeur radio fréquence 2 de recevoir de la part d'un émetteur radio fréquence 8 intégré à l'objet portatif d'identification 7 un message de commande comportant notamment un mot numérique caractéristique de l'identification du porteur de l'objet portatif d'identification 7.

En particulier, ainsi qu'il est connu dans l'état de la technique, si le message de commande reçu et décodé par le récepteur décodeur 2 du contrôleur embarqué 1 contient un mot numérique d'identification reconnu par le contrôleur, le récepteur décodeur 2 produit un ordre d'activation des commande désiré de fonction du véhicule grâce à l'action sur un module de commande de fonctions de véhicule 3.

Ainsi qu'il est connu notamment dans l'état de la technique, un tel module de commande de fonctions de véhicule 3 permet :
- d'activer l'ouverture et ou la fermeture des ouvrants du véhicule ou de l'un particulier d'entre eux ;
- d'activer ou de désactiver l'organe de démarrage du groupe motopropulseur du véhicule ;
- de transmettre des paramètres de réglage du poste de conduite et ou d'autres organes équipant l'habitacle du véhicule ; etc.

Selon l'invention, le système de commande pour véhicule de l'invention comporte aussi un module générateur de trames TTS 4 (TTS est un acronyme du terme anglo-saxon Transmission Through Skin). Un module générateur de trame TTS 4 est destiné à réaliser un canal de communication mettant en oeuvre un courant traversant le corps humain d'un individu porteur d'un objet portatif d'identification 7. Un tel module générateur de trame TTS 4 peut être ou non couplé au contrôleur embarqué 1. Quand le module générateur de trame TTS 4 est couplé au contrôleur embarqué 1, il lui est connecté par un bus de commande, par exemple à l'aide du bus de commande qui a été décrit ci-dessus, de façon à travailler de manière programmée selon le fonctionnement et ou la programmation du contrôleur embarqué 1 et ou du récepteur décodeur de radio fréquence 2.

Le générateur de trame TTS 4 est conçu de manière à produire des messages contenant des informations numériques prédéterminées qui sont transmises à un coupleur 5 de communication TTS qui produit un courant électrique modulé qui est fourni à un élément conducteur solidaire d'un élément 6 de l'habitacle du véhicule dans lequel est monté le contrôleur embarqué 1 comme une poignée de porte, un élément de carrosserie, un enjoliveur, une baguette de carrosserie, un bouchon de réservoir, etc.

Lorsque le porteur de l'objet portatif d'identification 7 touche l'élément d'habitacle 6 ainsi équipé, un courant circulant à travers le corps s'établit et parvient à une électrode TTS 10 solidaire de l'objet portatif d'identification 7. Un module récepteur TTS 9 équipant l'objet portatif d'identification 7 reçoit alors le message numérique transmis par le canal de communication mettant en oeuvre un courant traversant le corps. Le message reçu par le module récepteur TTS 9 est décodé par ce dernier, et un ordre d'activation peut être alors émis à destination d'un émetteur radio fréquence 8 porté par l'objet portatif d'identification 7.

Particulièrement, l'ordre d'activation permet de placer l'ensemble des circuits électroniques de l'objet portatif d'identification 7 en état de consommation sur une source électrique comme une pile électrique (non représentée) intégrée à l'objet portatif d'identification 7. Dans ce réveil, l'émetteur radio fréquence 8 est programmée de manière à lire un code d'identification inscrit dans une mémoire électronique (non représentée) de l'objet portatif d'identification 7. Le code d'identification enregistré est alors transmis par un canal de communication sans contact, de type radio fréquence, sous la forme d'un message prédéterminé exécuté dans une modulation prédéterminée, à l'aide de l'émetteur radio fréquence 8 intégré à l'objet portatif d'identification 7.

Le message transmis par le canal de communication sans contact peut alors être reçu et décodé par le récepteur décodeur radio fréquence 2 installé à bord du contrôleur embarqué 1 sur le véhicule de manière à réaliser une commande de condamnation ou de décondamnation des ouvrants du véhicule par exemple, à l'aide du module de commande de fonction de véhicule 3.

Dans ce mode de réalisation représenté à la figure 1, le canal de communication mettant en oeuvre un courant traversant le corps est unidirectionnel. Dans un autre mode de réalisation, l'objet portatif d'identification comporte aussi un circuit émetteur de modulation TTS (non représenté) et qui est destiné à transmettre des informations prédéterminées, enregistré et ou calculée de manière programmée à l'intérieur de l'objet portatif d'identification 7 pour être communiqué à un récepteur TTS (non représenté) intégrée ou associé au contrôleur embarqué 1 à bord du véhicule.

À la figure 2, on a représenté un schéma bloc expliquant un mode particulier de constitution d'un objet portatif d'identification exploité dans un système de commande de véhicule selon l'invention.

Pour constituer un objet portatif d'identification selon l'invention, on utilise un premier objet portatif d'identification 20 qui comporte un moyen de communication sans contact sous forme d'un circuit imprimé 21 dont les dimensions sont déterminées dans une gamme préétablie. De même, l'alimentation électrique du circuit imprimé est réalisée à l'aide de deux fils électriques qui peuvent être détachés de la source d'alimentation (non représenté) dans le premier objet portatif d'identification 20.

Une fois séparé du premier objet portatif d'identification 20, qui peut être une télécommande radio fréquence de véhicule préexistant, le circuit imprimé 21 qui réalise une communication sans contact est alors transférée dans un montage 22 dans un second objet portatif d'identification 23 qui a été fabriqué spécialement à cet effet et qui comporte notamment une source d'alimentation électrique comme une pile électrique 31 et un circuit imprimé 30 sur lequel est préalablement constitué un moyen de communication mettant en oeuvre un courant traversant le corps. En particulier, le circuit imprimé 30 est électriquement connecté par une borne de sortie électrique (non représentée) adaptée à au moins une électrode conductrice comme l'électrode 25 et ou l'électrode 27 sur le second objet portatif d'identification 23.

Le second objet portatif d'identification 23 est constitué en deux moitiés 24 est 26 connectées par des charnières comme la charnière 29, par exemple sous forme d'un boîtier de style particulier prédéterminé, et comporte aussi lors de sa fabrication une zone dont les dimensions correspondent à la gamme des dimensions prédéterminées que respecte le circuit imprimé 21 de tous les premiers objets portatifs identification 20 que le second objet portatif d'identification 23 peut recevoir.

Une fois inséré mécaniquement dans le boîtier 24, 26 constituant le second objet portatif d'identification 23, le circuit imprimé 21 occupe la position 28 et peut être connecté par son alimentation électrique à la pile 31 de manière à remplir la même fonction dans le second objet portatif d'identification 23 que celle qu'il remplissait dans le premier objet portatif d'identification 20.

Lors de la constitution du second objet portatif d'identification 23, une fois le circuit imprimé 28 réalisant une communication sans contact inséré dans le boîtier, celui-ci est rabattu autour des charnières 29 et fermé à l'aide d'un organe de fermeture non représenté.

On a ainsi constitué un nouvel objet portatif d'identification 23 qui comporte un premier canal de communication sans contact, par exemple de type radio fréquence et un second canal de communication mettant en oeuvre un courant traversant le corps à l'aide du circuit imprimé 30 et des électrodes 25 et 27 qui sont disposées de façon à permettre un contact avec la peau de la personne qui porte le second objet portatif d'identification 23.

Si le véhicule sur lequel se trouve le contrôleur embarqué 1 ne comporte pas de canal de communication mettant en oeuvre un courant traversant le corps, il est alors équipé selon l'enseignement de la figure 1 d'un générateur de messages TTS, d'un coupleur TTS et d'un capteur ou effecteur TTS associé à un élément d'habitacle 6 de façon à former un système de commande selon l'invention.

On remarque que cette disposition de l'invention permet de transformer des systèmes existants de commande de véhicule en bénéficiant des avantages caractéristiques d'une communication TTS.

Particulièrement, il est aussi possible dans certains cas de réaliser une connexion électrique entre le circuit imprimé 30 et le circuit imprimé 28 lorsque un bornier convenable est prévu sur le circuit imprimé 28. De la sorte, un signal de dialogue peut-être échangé entre le circuit imprimé 30 et le circuit imprimé 28 dans le second objet portatif d'identification 7.

Dans un mode particulier de réalisation, le canal de communication sans contact est un canal de communication radio fréquence à haute fréquence. Particulièrement une telle disposition permet d'initier un dialogue entre l'objet portatif d'identification et le contrôleur embarqué à bord du véhicule à courte distance lors de l'initialisation par une communication sur le canal mettant en oeuvre un courant traversant le corps puis de poursuivre ce dialogue, même à longue distance, à l'aide du canal de communication sans contact utilisant un rayonnement modulé en haute fréquence.

On va maintenant décrire un mode particulier de réalisation dans lequel le générateur de messages TTS 4 est activé de manière à permettre un dialogue dans le cadre de l'application un système de commande de véhicule.

Particulièrement, le générateur de messages TTS 4 peut travailler en permanence en envoyant périodiquement des messages d'interrogation de type TTS. qui ne sont alors pas perçus tant que l'utilisateur porteur d'un objet portatif d'identification dotée d'une ressource de communication mettant en oeuvre un courant traversant le corps ne touche pas un élément conducteur connecté au générateur de message TTS 4.

Dans un autre mode de réalisation, chaque élément d'habitacle 6 doté d'un transmetteur TTS est aussi équipé d'un moyen de détection de la présence d'un utilisateur porteur d'un objet portatif d'identification. Un tel moyen de détection de comporter un capteur de proximité comme un capteur capacitif ou encore un interrupteur manoeuvré par le contact physique entre une partie du corps de l'utilisateur et l'élément d'habitacle 6.

Dans un autre mode de réalisation, chaque zone particulière de l'habitacle du véhicule à l'extérieur, ou à l'intérieur de celui-ci, et dans ce cas particulièrement au poste de conduite, peut-être équipé d'un ou plusieurs éléments de communication TTS. Dans ce cas, chaque zone peut-être alors identifiée à l'aide d'un code d'identification de zone qui est insérée dans le message TTS produits par chaque générateur TTS associé à une telle zone du véhicule. En particulier dans ce cas, l'objet portatif d'identification de l'invention peut alors comporter un programme particulier déclenché par la détection d'un tel code d'identification de zone. Réciproquement, lorsque l'objet portatif d'identification de l'invention a reçu un code d'identification de zone particulier, il peut insérer un message permettant au contrôleur embarqué 1 d'exercer une action correspondant à la zone de l'habitacle et ou du poste de conduite dans laquelle a été conduite la communication TTS par courant traversant le corps. On s'assure ainsi à la fois de la preuve que la commande est exécutée réellement en présence de l'utilisateur d'une part et d'autre part de l'indication d'une zone particulière dans laquelle la commande est réalisée. Particulièrement, il est alors possible d'associer un groupe de fonctions particulières de commande du véhicule à chaque zone ou à chaque groupe de zone constitué dans l'habitacle et ou le poste de commande.

## Revendications

1. Système de communication entre un objet portatif d'identification (7) et un contrôleur (1) embarqué à bord d'un véhicule équipé d'un premier canal de communication sans contact entre au moins un objet portatif d'identification et un contrôleur de commande embarqué à bord d'un véhicule, **caractérisé par le fait que** le système de communication comporte un second canal de communication (4-6 ; 9, 10) utilisant un courant traversant le corps et en ce que le premier canal de communication sans contact permet de transmettre un message à partir de l'objet portatif d'identification (7) audit contrôleur (1), à la suite de l'établissement d'un courant traversant le corps et de son utilisation par le second canal de communication (4-6 ; 9, 10).

2. Système selon la revendication 1, **caractérisé en ce que** le message correspond à un code d'identification de l'objet portatif d'identification (7).

3. Système selon la revendication 1 ou 2, **caractérisé en ce que** le message correspond à une action correspondant à une zone d'habitacle du véhicule et/ou du poste de conduite dans laquelle a été conduite la communication par courant traversant le corps.

4. Système selon l'une quelconque des revendications précédentes, **caractérisé en ce que** le canal de communication mettant en oeuvre un courant traversant le corps est unidirectionnel et comporte un générateur de signal (4) associé au contrôleur embarqué à bord du véhicule, et un récepteur de signal (9) associé à l'objet portatif d'identification (7).

5. Système selon l'une quelconque des revendications précédentes 1 à 3, **caractérisé en ce que** le canal de communication mettant en oeuvre une communication sans contact (8, 2) est contrôlé par la réception d'un message prédéterminé, initiée par le contrôleur (1) embarqué à bord du véhicule et transmis par l'intermédiaire du canal de communication mettant en oeuvre un courant traversant le corps (4-6 ; 9, 10).

6. Système selon la revendication précédente, **caractérisé en ce que** l'objet portatif d'identification (7) est composé sur la base d'un premier objet portatif d'identification (20) équipé de ressources (30, 31) assurant un canal de communication mettant en oeuvre un courant traversant le corps, à l'aide d'un second objet portatif d'identification (23) dans lequel est réservé une ressource pour recevoir un circuit préexistant équipé de ressources assurant un canal de communication mettant en oeuvre une communication sans contact.

7. Système selon l'une quelconque des revendications précédentes, **caractérisé en ce que** le canal de communication mettant en oeuvre une communication sans contact (8, 2) est un canal radio fréquence.

8. Système selon la revendication précédente, **caractérisé en ce que** le canal radio fréquence est d'un canal hautes fréquences.

9. Système selon l'une quelconque des revendications précédentes, **caractérisé en ce que** le contrôleur (1) embarqué à bord du véhicule est connecté à un élément conducteur (6) solidaire d'une partie de l'habitacle du véhicule.

10. Système selon l'une quelconque des revendications 5 à 9, **caractérisé en ce que** le message prédéterminé est généré par le contrôleur (1) embarqué à bord du véhicule sur la base de la détection d'un mouvement et ou d'une action de l'utilisateur porteur de l'objet portatif d'identification (7).

11. Système selon la revendication précédente, **caractérisé en ce que** la détection d'un mouvement et ou d'une action de l'utilisateur est exécutée sur la base d'un capteur capacitif et ou d'un interrupteur (6).

12. Système selon la revendication 10 ou 11, **caractérisé en ce que** le message prédéterminé est généré périodiquement par le contrôleur (1) embarqué à bord du véhicule.

13. Système selon l'une quelconque des revendications précédentes, **caractérisé en ce que** l'objet portatif d'identification (7) comporte un moyen de réveil de ses composants électroniques sur la base de la réception d'un message prédéterminé transmis par le canal de communication mettant en oeuvre un courant traversant le corps (4-6 ; 9, 10).

14. Système selon l'une quelconque des revendications précédentes, **caractérisé en ce que** l'objet portatif d'identification (7) comporte aussi un moyen pour générer un message connecté à une ressource d'émission d'une communication mettant en oeuvre un courant traversant le corps.

15. Système selon la revendication précédente, **caractérisé en ce que** la ressource d'émission d'une communication mettant en oeuvre un courant traversant le corps coopère avec un moyen de détection sans contact d'un courant traversant le corps, montés sur le véhicule et coopérant avec le contrôleur (1) de commande embarqué à bord du véhicule.

16. Système selon l'une quelconque des revendications précédentes, **caractérisé en ce que** le contrôleur (1) de commande embarqué à bord du véhicule coopère avec une pluralité de moyens de communication (7) mettant en oeuvre un courant traversant le corps, chacun comportant au moins un moyen (23 - 31) pour générer un signal identifiant une zone du véhicule dans laquelle est initiée la communication mettant en oeuvre un courant traversant le corps.

## Claims

1. System of communication between a portable identification unit (7) and a controller (1) on board a vehicle fitted with a first wireless communication channel between at least one portable identification unit and a controlling controller on board a vehicle, **characterized in that** the communication system comprises a second communication channel (4-6; 9, 10) using a current passing through the body and **in that** the first communication channel without contact can be used to transmit a message from the portable identification unit (7) to said controller (1), following the establishment of a current passing through the body and its use by the second communication channel (4-6; 9, 10).

2. System according to Claim 1, **characterized in that** the message corresponds to an identification code for the portable identification unit (7).

3. System according to Claim 1 or 2, **characterized in that** the message corresponds to an action corresponding to an area of the passenger compartment of the vehicle and/or of the driver's immediate environment in which the communication by current passing through the body has been conducted.

4. System according to any one of the preceding claims, **characterized in that** the communication channel implementing a current passing through the body is unidirectional and comprises a signal generator (4) associated with the controller on board the vehicle, and a signal receiver (9) associated with the portable identification unit (7).

5. System according to any one of the preceding Claims 1 to 3, **characterized in that** the communication channel implementing a wireless communication (8, 2) is controlled by the reception of a predetermined message, initiated by the controller (1) on board the vehicle and transmitted via the communication channel implementing a current passing through the body (4-6; 9, 10).

6. System according to the preceding claim, **characterized in that** the portable identification unit (7) is constructed on the basis of a first portable identification unit (20) equipped with resources (30, 31) providing a communication channel implementing a current passing through the body, using a second portable identification unit (23) in which a resource is reserved to receive a pre-existing circuit equipped with resources providing a communication channel implementing a wireless communication.

7. System according to any one of the preceding claims, **characterized in that** the communication channel implementing a wireless communication (8, 2) is a radio-frequency channel.

8. System according to the preceding claim, **characterized in that** the radio-frequency channel is a high-frequency channel.

9. System according to any one of the preceding claims, **characterized in that** the controller (1) on board the vehicle is connected to a conductive element (6) joined to a part of the vehicle passenger compartment.

10. System according to any one of Claims 5 to 9, **characterized in that** the predetermined message is generated by the controller (1) on board the vehicle, based on the detection of a movement and/or an action on the part of the user holding the portable identification unit (7).

11. System according to the preceding claim, **characterized in that** the detection of a movement and/or an action on the part of the user is executed on the basis of a capacitive sensor and/or a switch (6).

12. System according to Claim 10 or 11, **characterized in that** the predetermined message is generated periodically by the controller (1) on board the vehicle.

13. System according to any one of the preceding claims, **characterized in that** the portable identification unit (7) comprises a means of activating its electronic components on the basis of the reception of a predetermined message transmitted via the communication channel implementing a current passing through the body (4-6; 9, 10).

14. System according to any one of the preceding claims, **characterized in that** the portable identification unit (7) also comprises a means of generating a message connected to a transmission resource of a communication implementing a current passing through the body.

15. System according to the preceding claim, **characterized in that** the transmission resource of a communication implementing a current passing through the body cooperates with a means of wirelessly detecting a current passing through the body, mounted on the vehicle and cooperating with the controlling controller (1) on board the vehicle.

16. System according to any one of the preceding claims, **characterized in that** the controlling controller (1) on board the vehicle cooperates with a plurality of communication means (7) implementing a current passing through the body, each comprising at least one means (23-31) of generating a signal identifying an area of the vehicle in which the communication implementing a current passing through the body is initiated.

## Patentansprüche

1. Kommunikationssystem zwischen einem tragbaren Identifikationsgegenstand (7) und einem in ein Fahrzeug eingebauten Steuergerät (1), das mit einem ersten kontaktlosen Kommunikationskanal zwischen mindestens einem tragbaren Identifikationsgegenstand und einem in ein Fahrzeug eingebauten Steuergerät ausgestattet ist, **dadurch gekennzeichnet, dass** das Kommunikationssystem einen zweiten, einen den Körper durchfließenden Strom einsetzenden Kommunikationskanal (4-6; 9, 10) aufweist, und dass der erste kontaktlose Kommunikationskanal es ermöglicht, nach dem Aufbau eines den Körper durchfließenden Stroms und seiner Nutzung durch den zweiten Kommunikationskanal (4-6; 9, 10) eine Mitteilung ausgehend vom tragbaren Identifikationsgegenstand (7) an das Steuergerät (1) zu übertragen.

2. System nach Anspruch 1, **dadurch gekennzeichnet, dass** die Mitteilung einem Identifikationscode des tragbaren Identifikationsgegenstands (7) entspricht.

3. System nach Anspruch 1 oder 2, **dadurch gekennzeichnet, dass** die Mitteilung einer Aktion entspricht, die einer Zone des Innenraums des Fahrzeugs und/oder des Fahrerplatzes entspricht, in der die Kommunikation durch den Körper durchfließenden Strom durchgeführt wurde.

4. System nach einem der vorhergehenden Ansprüche, **dadurch gekennzeichnet, dass** der einen den Körper durchfließenden Strom einsetzende Kommunikationskanal unidirektional ist und einen Signalgenerator (4), der dem in das Fahrzeug eingebauten Steuergerät zugeordnet ist, und einen Signalempfänger (9) aufweist, der dem tragbaren Identifikationsgegenstand (7) zugeordnet ist.

5. System nach einem der vorhergehenden Ansprüche 1 bis 3, **dadurch gekennzeichnet, dass** der eine kontaktlose Kommunikation einsetzende Kommunikationskanal (8, 2) vom Empfang einer vorbestimmten Mitteilung gesteuert wird, die von dem in das Fahrzeug eingebauten Steuergerät (1) initiiert und mittels des einen den Körper durchfließenden Strom einsetzenden Kommunikationskanals (4-6; 9, 10) übertragen wird.

6. System nach dem vorhergehenden Anspruch, **dadurch gekennzeichnet, dass** der tragbare Identifikationsgegenstand (7) auf der Basis eines ersten tragbaren Identifikationsgegenstands (20), der mit Ressourcen (30, 31) ausgestattet ist, die einen einen den Körper durchfließenden Strom einsetzenden Kommunikationskanal gewährleisten, mit Hilfe eines zweiten tragbaren Identifikationsgegenstands (23) hergestellt wird, in dem eine Ressource reserviert ist, um eine vorab existierende Schaltung zu empfangen, die mit Ressourcen ausgestattet ist, die einen eine kontaktlose Kommunikation einsetzenden Kommunikationskanal gewährleisten.

7. System nach einem der vorhergehenden Ansprüche, **dadurch gekennzeichnet, dass** der eine kontaktlose Kommunikation einsetzende Kommunikationskanal (8, 2) ein Funkfrequenzkanal ist.

8. System nach dem vorhergehenden Anspruch, **dadurch gekennzeichnet, dass** der Funkfrequenzkanal ein Hochfrequenzkanal ist.

9. System nach einem der vorhergehenden Ansprüche, **dadurch gekennzeichnet, dass** das in das Fahrzeug eingebaute Steuergerät (1) mit einem Leiterelement (6) verbunden ist, das mit einem Teil des Innenraums des Fahrzeugs fest verbunden ist.

10. System nach einem der Ansprüche 5 bis 9, **dadurch gekennzeichnet, dass** die vorbestimmte Mitteilung von dem in das Fahrzeug eingebauten Steuergerät (1) auf der Basis der Erfassung einer Bewegung und/oder einer Aktion des den tragbaren Identifikationsgegenstand (7) tragenden Benutzers erzeugt wird.

11. System nach dem vorhergehenden Anspruch, **dadurch gekennzeichnet, dass** die Erfassung einer Bewegung und/oder einer Aktion des Benutzers auf der Basis eines kapazitiven Sensors und oder eines Schalters (6) ausgeführt wird.

12. System nach Anspruch 10 oder 11, **dadurch gekennzeichnet, dass** die vorbestimmte Mitteilung periodisch von dem in das Fahrzeug eingebauten Steuergerät (1) erzeugt wird.

13. System nach einem der vorhergehenden Ansprüche, **dadurch gekennzeichnet, dass** der tragbare Identifikationsgegenstand (7) eine Einschalteinrichtung seiner elektronischen Bauteile auf der Basis des Empfangs einer vorbestimmten Mitteilung aufweist, die von dem einen den Körper durchfließenden Strom einsetzenden Kommunikationskanal (4-6; 9, 10) übertragen wird.

14. System nach einem der vorhergehenden Ansprüche, **dadurch gekennzeichnet, dass** der tragbare Identifikationsgegenstand (7) auch eine Einrichtung aufweist, um eine Mitteilung zu erzeugen, die mit einer Senderessource einer einen den Körper durchfließenden Strom einsetzenden Kommunikation verbunden ist.

15. System nach dem vorhergehenden Anspruch, **dadurch gekennzeichnet, dass** die Senderessource einer einen den Körper durchfließenden Strom einsetzenden Kommunikation mit einer Einrichtung zur kontaktlosen Erfassung eines den Körper durchfließenden Stroms zusammenwirkt, die auf das Fahrzeug montiert ist und mit dem in das Fahrzeug eingebauten Steuergerät (1) zusammenwirkt.

16. System nach einem der vorhergehenden Ansprüche, **dadurch gekennzeichnet, dass** das in das Fahrzeug eingebaute Steuergerät (1) mit mehreren einen den Körper durchfließenden Strom einsetzenden Kommunikationseinrichtungen (7) zusammenwirkt, wobei jede mindestens eine Einrichtung (23 - 31) aufweist, um ein Signal zu erzeugen, das eine Zone des Fahrzeugs identifiziert, in der die einen den Körper durchfließenden Strom einsetzende Kommunikation initiiert wird.
